# EUROPEAN PATENT APPLICATION

(11) **EP 1 981 241 A1**
(43) Date of publication of application: **15.10.2008**
(21) Application number: 07702259.8
(22) Date of filing: 02.02.2007
(51) Int. Cl.: H04L 29/06

(54) **A METHOD FOR INSTALLING FILE, A DIGITAL SUBSCRIBER LOOP SYSTEM AND A CUSTOMER PREMISE EQUIPMENT**

(30) Priority: 21.02.2006 CN 200610033906
(71) Applicant: Huawei Technologies Co., Ltd., Longgang District Shenzhen 518129 (CN)
(72) Inventor: WU, Huangwei, Shenzhen Guangdong 518129 (CN)
(74) Representative: Körber, Martin Hans
(86) International application number: PCT/CN2007/000367
(87) International publication number: WO 2007/095833

(57) **Abstract**

A method for installing files, a digital subscriber loop (DSL) system, and customer premises equipment (CPE) are provided. The method includes the following steps: a CPE acquires a package which includes a command list and payload files, and in which the command list includes an Execute command; the CPE processes the command list, determines corresponding payload files based on the Execute command in the command list, and executes functions of the payload files. In the method and system of the present invention, a new Execute command is added into the command list defined by a TR-069 standard. The payload files in the package are executed under the instruction of the Execute command after the CPE downloads the package carrying the Execute command. The CPE can determine complicated instance or carry out complex operations based on the downloaded package.

## Description

### FIELD OF THE INVENTION

The present invention relates to a digital subscriber loop (DSL) technology field, and in particular to a method for installing files in customer premises equipment (CPE), a digital subscriber loop system, and a CPE.

### BACKGROUND

With development of the DSL technology, it has become an urgent problem to be solved how to guarantee interconnections between equipments of different manufacturers in a DSL system. In the prior art, a TR-069 standard established by the DSL Forum is generally adopted to realize interconnections between equipments of different companies. The TR-069 standard is a CPE Wide Area Network (WAN) management protocol for the DSL system, which achieves remote management of CPEs through an auto-configuration server (ACS), for example, through stipulating how the ACS controls the CPEs to upload and download files, etc.

In order to support the file-download function of the CPE, the TR-069 standard defines a signed package format. In the signed package format, the file is encapsulated into a package, and meanwhile a series of operation commands to the file are added. In this way, the CPE is able to perform proper operations on the file in the package after the CPE has downloaded the package.

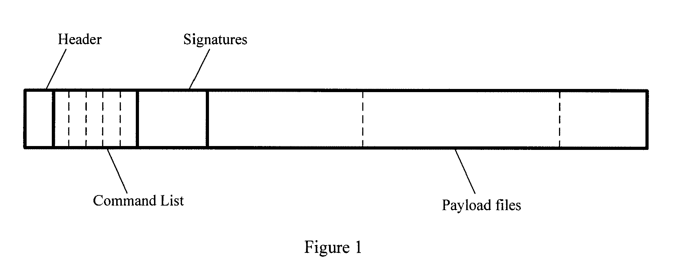

As shown in Figure 1, the signed package format defined by the TR-069 standard includes four parts: a header, a command list, signatures, and payload files; and specific functions of each part are shown in Table 1.

**Table 1**

| Part | Description |
|---|---|
| Header | The Header is a fixed-length structure including a preamble, format version, and lengths of the command list and payload components. |
| Command List | The Command List contains a sequence of instructions to be followed in extracting and installing the files contained within the package. |
| Signatures | Digital signatures of the files. |
| Payload Files | This section of the package contains one or more files to be installed following the instructions in the command list (the format of the payload files is not specified). |

Assuming there is a package on the ACS, and an 'Add File' command is recorded in the command list of the package, the CPE checks its own specified position according to the "Add file" command so as to judge whether there is a file with the same name as the specified file or not. If there is not a file with the same name as the specified file, the specified file is extracted from the payload files of the package and added to a specified position of the CPE. For example, the config.cfg file of the payload files in the package is added to their own "/boot/" directory. Of course, the config.cfg file is pre-encapsulated in the payload files of the package. If there is a file with the same name as the specified file, the "Add File" command is skipped and the next command in the command list is executed.

In specific operations, the CPE may first download the package locally from the ACS, and then Execute commands recorded in the command list of the package. When executing the above mentioned "Add File" command, the CPE firstly checks whether there is a config.cfg file under its own "/boot/" directory or not, and if there is no config.cfg file under its own "/boot/" directory, the config.cfg file in the payload files of the package is extracted and added to "/boot/" directory of the CPE; otherwise, the CPE skips the "Add File" command to execute the next command in the command list.

During the file installation described above, merely several simple situations are considered, for example, whether there is a file with the same name as the file to be installed, or whether there is a file with the same name but different extension names, etc. Some complicated situations, for example, checking and judging whether a certain service is in a running state or not when the file is installed, or some complicated operations, for example, disabling or re-enabling a specified service, are not supported in the file installation process of the prior DSL system.

### SUMMARY

Embodiments of the present invention provide a method for installing files so that the CPE is capable of judging complicated situations or executing complicated operations when installing payload files.

Embodiments of the present invention further provide a DSL system and a CPE so that the CPE is capable of judging complicated situations or executing complicated operations.

In order to achieve the above objectives, a technical solution of an embodiment of the present invention is specifically realized as following:

An embodiment of the present invention provides a method for installing files, including:

A CPE acquires a package including a command list and payload files, and in which the command list includes an Execute command.

The CPE processes commands in the command list, determines corresponding payload files according to the Execute command in the command list, and executes functions of the payload file.

An embodiment of the present invention provides a DSL system, including an auto-configuration server (ACS) and a CPE.

The ACS is adapted to generate a package which includes a command list and payload files, and the command list includes an Execute command.

The CPE is adapted to acquire the package which includes the command list and the payload files, determine corresponding payload files according to the Execute command in the command list, and execute functions of the payload files.

An embodiment of the present invention further provides a CPE, including a first unit and a second unit.

The first unit is adapted to acquire a package which includes a command list and payload files, and in which the command list includes an Execute command.

The second unit is adapted to process a command in the command list, determine corresponding payload files according to the Execute command in the command list, and execute functions of the payload files.

As can be seen from the above technical solution, the method for installing files according to the present invention adds a new Execute command into the command list defined by the TR-069 standard. Once a package carrying the Execute command is downloaded, the CPE in the DSL system executes payload files in the package under the instruction of the Execute command so that the CPE is capable of judging complicated situations or executing complicated operations according to the downloaded package.

### BRIEF DESCRIPTION OF THE DRAWINGS

Figure 1 is a signed package format defined by a TR-069 standard in the prior art; and

Figure 2 is a flow chart of installing files by a CPE according to an embodiment of the present invention.

### DETAILED DESCRIPTION

In order to make the CPE support more complicated situations and execute complicated operations, the present invention adds a new Execute command into the command list of the signed package format defined by the TR-069 standard, which is used to instruct the CPE to execute payload files in the downloaded package.

In an embodiment of the present invention, parameters of the Execute command are defined as follows.

**Table 2**

| **Parameter** | **Type** | **Description** |
|---|---|---|
| Flags | 32-bit integer | The Flags is defined as follows according to bit: Bit 0 (LSB): a non-safe flag. 1 indicates that if this command is executed successfully but the subsequent commands in the command list are failed, the equipment will be in a non-safe state, and a recovery function of the file system should be executed to recover the equipment into a known installation state. All of the other bits should be kept and must be set to 0. The equipment must ignore these bits. |
| Path Offset | 32-bit integer | Indicates an offset of a Path parameter in the package (in bytes) |
| Path Length | 32-bit integer | Indicates the length of the Path parameter in the package (in bytes) |
| Hash Type | 32-bit integer | Indicates an algorithm used by the Hash parameter, which is defined as follows: It indicates that SHA-1 Hash algorithm is used when the value is set to 1. The other values are kept currently. |
| Hash Offset | 32-bit integer | Indicates an offset of the Hash parameter in the package (in bytes) |
| Hash Length | 32-bit integer | Indicates a length of the Hash parameter in the package (in bytes) |
| File Offset | 32-bit integer | Indicates an offset of the payload files to be executed by the Execute command in the package (in bytes) |
| File Length | 32-bit integer | Indicates a length of the payload files to be executed by the Execute command in the package (in bytes) |
| Path | String of Path Length | Indicates path information when a file is executed. |
| Hash | String o of Hash length | Indicates Hash value of the payload files. |

When the ACS needs to control the CPE to complete certain functions, the ACS generates corresponding payload files. For example, the ACS defines an UpgradeLanService.run file with the following functions: checking whether the LAN service of the CPE is running or not; if the LAN service of the CPE is running, disabling the LAN service first, and then re-enabling the LAN service after the configuration file of the LAN service is upgraded.

Then, the ACS generates a package, encapsulates an UpgradeLanService.run file into the payload files of the package, and sets an Execute command in the command list of the package so as to instruct the CPE to execute the UpgradeLanService.run file of payload files.

Further, the CPE includes a first unit and a second unit. The first unit is adapted to acquire a package which includes a command list and payload files, and in which the command list includes an Execute command. The second unit is adapted to process commands in the command list, determine corresponding payload files according to the Execute command in the command list, and execute functions of the payload files.

In an embodiment of the present invention, assuming the Execute command instructs to execute an UpgradeLanService.run file under the directory "/DATA/", the processing flow conducted by the CPE is described as follows:

1. A process is executed according to the Execute command. The process includes: the CPE acquires the content of the path according to the Path Offset and/or Path Length, so as to obtain the path for executing the payload files, and the path is "/DATA/" directory in the present embodiment.

The CPE acquires the content of the payload files according to the File Offset and/or the File Length. The File Offset indicates a position for storing the UpgradeLanService.run file, and the File Length indicates a storage length of the UpgradeLanService.run file in the package.

The CPE acquires content of the Hash according to the Hash Offset and/or the Hath Length, and then judges whether the payload files are tampered or not according to the Hash parameter. In addition, the CPE can verify the integrality of the package according to the Hash Type.

In the embodiment, the Flags parameter is not used. In practical applications, the execution of commands subsequent to the Execute command can be marked by the Flags parameter.

2. The UpgradeLanService.run file in the payload files of the package is extracted and the UpgradeLanService.run file is executed under the "/DATA/" directory of the CPE.

In other words, when the CPE installs payload files according to the command list in the downloaded package, if the Execute command is extracted, the specified payload files are executed under a specified path.

The executed payload files can be an executable script or an executable file. The payload files are used to check and judge various conditions and execute complicated operations, and the functions of the payload files can be designed depending upon actual requirements. For example, the functions of the payload files are set as checking and judging whether the specified service is running or not; alternatively, the functions of the payload files are set as disabling or re-enabling a certain service. The functions of the payload files are set depending upon the file provider, whereas the functions of the payload files are realized depending upon the CPE.

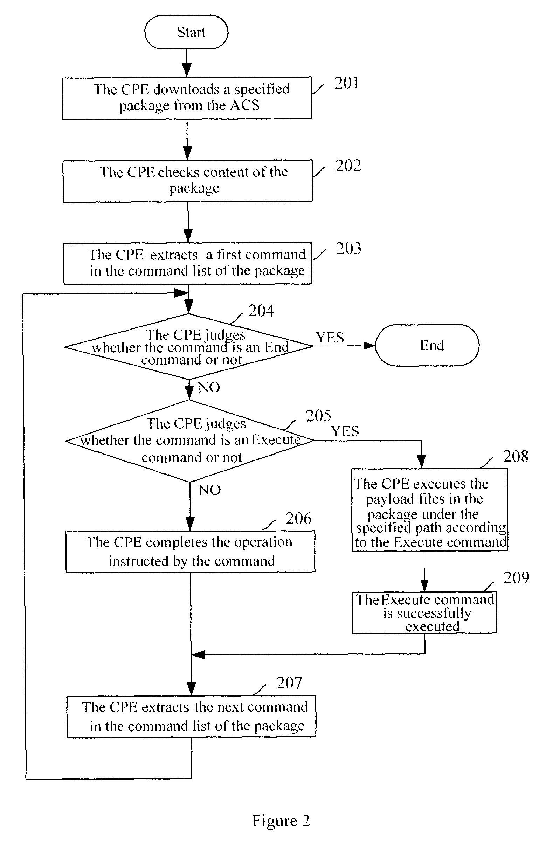

Figure 2 is a flow chart of installing files by a CPE according to an embodiment of the present invention, which includes the following steps:

Step 201: The CPE downloads a specified package from the ACS.

Step 202: The CPE checks the content of the package. Specifically, the CPE checks the integrality of the package and judges whether the format of the package accords with the requirements or not.

Step 203: The CPE extracts the first command in the command list of the package.

Step 204: The CPE judges whether the command is the End command or not. The procedure of this embodiment ends if the command is the End command, in other words, the file has been successfully installed; otherwise, Step 205 is executed.

Step 205: The CPE judges whether the command is an Execute command or not. Step 208 is executed if the command is the Execute command; otherwise, Step 206 is executed.

Step 206: The CPE completes the operation instructed by the command.

Step 207: The CPE extracts the next command in the command list of the package, and returns to execute Step 204.

Step 208: The CPE executes the payload files in the package under a specified path according to the Execute command.

For example, if the payload files are an UpgradeLanService.run file, the execution process of this step includes: checking whether the LAN service in the CPE is running or not; disabling the LAN service if the LAN service is running, and then re-enabling the LAN service after the configuration file of the LAN service has been upgraded.

Step 209: The CPE returns to execute Step 207 after executing the Execute command successfully.

In the step, the execution of the Execute command ends after the UpgradeLanService.run file has been executed. The CPE continues to execute the next command in the command list.

Though illustration and description of the present disclosure have been given by reference to exemplary embodiments thereof, it should be appreciated by persons of ordinary skills in the art that various changes in forms and details can be made without deviation from the spirit and scope of this disclosure, which are defined by the appended claims.

## Claims

1. A method for installing files, comprising:
acquiring, by a customer premises equipment (CPE), a package including a command list and payload files, wherein the command list comprises an Execute command; and
processing, by the CPE, commands in the command list, determining corresponding payload files according to the Execute command in the command list, and executing functions of the payload files.

2. The method according to claim 1, wherein processing, by the CPE, commands in the command list comprises:
acquiring, by the CPE, a command in the command list to judge whether the command is an End command or not; ending if the command is an End command; and
determining, by the CPE, whether the command is an Execute command or not if the command is not an End command; extracting, by the CPE, the payload files from the package according to parameters of the Execute command and executing functions of the payload files under a directory specified by the Execute command if the command is an Execute command; executing, by the CPE, an operation corresponding to the command if the command is not an execute command.

3. The method according to claim 2, wherein the Execute command carries at least one of following parameters: Flags, Path Offset, Path Length, Hash Type, Hash Offset, Hash Length, File Offset, File Length, Path, and Hash.

4. The method according to claim 1, wherein the package further records at least one of following items: a header and signatures.

5. The method according to claim 1, wherein the package is a Signed Package Format defined by a TR-069 standard.

6. The method according to claim 1, wherein the functions of the payload files comprise at least one of following items: checking and judging whether a specified service is running or not, and disabling or re-enabling a service.

7. The method according to any one of claims 1 to 6, wherein the payload files are executable files or executable scripts.

8. A digital subscriber loop (DSL) system, comprising an auto-configuration server (ACS) and a customer premises equipment (CPE), wherein
the ACS is adapted to generate a package which comprises a command list and payload files, and the command list comprises an Execute command; and
the CPE is adapted to acquire the package which comprises the command list and the payload files, determine corresponding payload files according to the Execute command in the command list, and execute functions of the payload files.

9. A customer premises equipment (CPE), comprising:
a first unit, adapted to acquire a package which comprises a command list and payload files, wherein the command list comprises an Execute command; and
a second unit, adapted to process commands in the command list, determine corresponding payload files according to the Execute command in the command list, and execute functions of the payload files.
